(19) Europäisches Patentamt
European Patent Office
Office européen des brevets

(11) **EP 3 208 353 A1**

(12) **EUROPEAN PATENT APPLICATION**
published in accordance with Art. 153(4) EPC

(43) Date of publication:
**23.08.2017 Bulletin 2017/34**

(51) Int Cl.:
*C22C 9/04* (2006.01)   *F16C 17/02* (2006.01)
*F16C 33/12* (2006.01)

(21) Application number: **15860959.4**

(22) Date of filing: **09.11.2015**

(86) International application number:
**PCT/JP2015/081471**

(87) International publication number:
**WO 2016/080225 (26.05.2016 Gazette 2016/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **18.11.2014   JP 2014233488**

(71) Applicant: **Taiho Kogyo Co., Ltd**
**Toyota-shi, Aichi 471-8502 (JP)**

(72) Inventors:
• **EBATA, Yuhei**
**Toyota-shi**
**Aichi 471-8502 (JP)**
• **MATSUMOTO, Shinji**
**Toyota-shi**
**Aichi 471-8502 (JP)**

(74) Representative: **Hart-Davis, Jason et al**
**Cabinet Beau de Loménie**
**158, rue de l'Université**
**75340 Paris Cedex 07 (FR)**

(54) **COPPER ALLOY FOR SLIDE BEARING AND SLIDE BEARING**

(57)      There are provided a copper alloy for a bearing and a bearing, which can prevent seizure in Mn-Si primary crystals. The copper alloy for a bearing and the bearing according to the present invention contain 25 wt% or more and 48 wt% or less of Zn, 1 wt% or more and 7 wt% or less of Mn, 0.5 wt% or more and 3 wt% or less of Si, and 1 wt% or more and 10 wt% or less of Bi, the balance consisting of inevitable impurities and Cu, and are characterized in that, in a sliding surface on which a counter material slides, the proportion of triangles having an area of 5000 $\mu m^2$ or more and including no Bi particle with a circle equivalent diameter of 10 $\mu m$ or more, among triangles having the closest three Mn-Si primary crystals as apices, is 20% or less.

FIG. 2A

EP 3 208 353 A1

FIG. 2B

FIG. 2C

FIG. 2D

**Description**

TECHNICAL FIELD

The present invention relates to a brass-based copper alloy for a plain bearing and a plain bearing.

BACKGROUND ART

A copper alloy in which crystallized Mn-Si compound particles are dispersed in a sliding surface is known (see Patent Literature 1). In Patent Literature 1, the average interparticle distance among the crystallized Mn-Si compound particles is defined within the range of 20 to 80 $\mu$m, thereby making it possible to bring a surface of the copper alloy matrix into a uniformly active state and to form a sulfide film at an early stage. This sulfide film enhances the seizure resistance.

CITATIONS LIST

Patent Literature 1: Japanese Unexamined Patent Application Publication No. 2011-179600

SUMMARY OF INVENTION

TECHNICAL PROBLEMS

However, with the progress of the wear of the matrix, hard crystallized Mn-Si compounds protrude, so that the load from a counter shaft concentrates on the crystallized Mn-Si compounds. Therefore, seizure can be easily and disadvantageously caused by the frictional heat generated at the crystallized Mn-Si compounds. Further, even if the average interparticle distance among the crystallized Mn-Si compound particles is managed within the range of 20 to 80 $\mu$m, a region with an increased interparticle distance, i.e., a region where the crystallized Mn-Si compounds are present sparsely, can be created. In the region where the crystallized Mn-Si compounds are present sparsely in this manner, the load can disadvantageously be concentrated on a small number of the crystallized Mn-Si compounds, thereby easily causing seizure.

The present invention has been made in light of the aforementioned problems, and an object thereof is to provide a copper alloy for a bearing and a bearing, which can prevent seizure in Mn-Si primary crystals.

SOLUTIONS TO PROBLEMS

In order to attain the aforementioned object, the copper alloy for a bearing and the bearing according to the present invention contain: 25 wt% or more and 48 wt% or less of Zn, 1 wt% or more and 7 wt% or less of Mn, 0.5 wt% or more and 3 wt% or less of Si, and 1 wt% or more and 10 wt% or less of Bi, the balance consisting of inevitable impurities and Cu, and are characterized in that, in a sliding surface on which a counter material slides, the proportion of triangles having an area of 5000 $\mu$m$^2$ or more and including no Bi particle with a circle equivalent diameter of 10 $\mu$m or more, among triangles having the closest three Mn-Si primary crystals as apices, is 20% or less.

In the copper alloy for a bearing configured in the above manner, Bi which has been supplied from the Bi particles, covers the sliding surface, thereby making it possible to improve the seizure resistance. Here, a region where triangles having Mn-Si primary crystals as apices and also having an area of 5000 $\mu$m$^2$ or more are formed, i.e., a region where Mn-Si primary crystals are present sparsely, can be formed. It is noted that, assuming an equilateral triangle having an area of 5000 $\mu$m$^2$ or more, the length of one side of the equilateral triangle, i.e., the distance between the Mn-Si primary crystals, is 107.45 $\mu$m. In the region where the Mn-Si primary crystals are present sparsely in this manner, the load would be concentrated on the Mn-Si primary crystals that are difficult to wear, and seizure easily occurs. However, if the proportion of triangles having an area of 5000 $\mu$m$^2$ or more and including no Bi particle with a circle equivalent diameter of 10 $\mu$m or more is at most 20% or less, Bi can be configured to cover the Mn-Si primary crystals even though the region where the Mn-Si primary crystals are present exists sparsely. Hence, the frictional resistance in the Mn-Si primary crystals can be reduced. Accordingly, it is possible to reduce the frictional heat in the Mn-Si primary crystals and to prevent seizure.

The incorporation of 25.0 wt% or more of Zn can enhance the strength of the Cu-Zn matrix and suppress sulfurization corrosion caused by the S component in a lubricant oil. In the region where the Mn-Si primary crystals are present sparsely, sulfurization corrosion due to the S component is easily caused by the frictional heat in the Mn-Si primary crystals. However, since the region where the Mn-Si primary crystals are present sparsely can be covered with Bi, the sulfurization corrosion due to the S component can be suppressed. It is noted that 35.0 wt% or more of Zn is incorporated so that the Mn-Si primary crystal particles can grow up to such a size as to obtain more excellent wear resistance. Also, the Zn content is suppressed to 48.0 wt% or less, thereby making it possible to prevent deposition of a large amount of the y phase in a Cu-Zn matrix and embrittlement of the Cu-Zn matrix.

The incorporation of 1.0 wt% or more of Mn and 0.5 wt% or more of Si can lead to deposition of the Mn-Si primary crystal particles in an amount enough to improve the wear resistance. On the other hand, the Mn content is suppressed to 7.0 wt% or less, and the Si content is suppressed to 3.0 wt% or less, thereby making it possible to prevent reduction in toughness due to excessive deposition of the Mn-Si primary crystals. It is noted that the copper alloy of the present invention can contain inevitable impurities.

BRIEF DESCRIPTION OF DRAWINGS

FIG. 1 is a perspective view of a radial bearing.
FIGs. 2A to 2D show photomicrographs of a sliding surface of the radial bearing.
FIG. 3A is an explanatory view of a wear test; and FIG. 3B is a schematic view explaining a wear volume.
FIG. 4 is an explanatory view about a seizure test.

DESCRIPTION OF EMBODIMENTS

An embodiment of the present invention will now be described in the following order.

(1) Configuration of radial bearing
(2) Method for producing radial bearing
(3) Experimental results
(4) Other embodiments

(1) Configuration of radial bearing

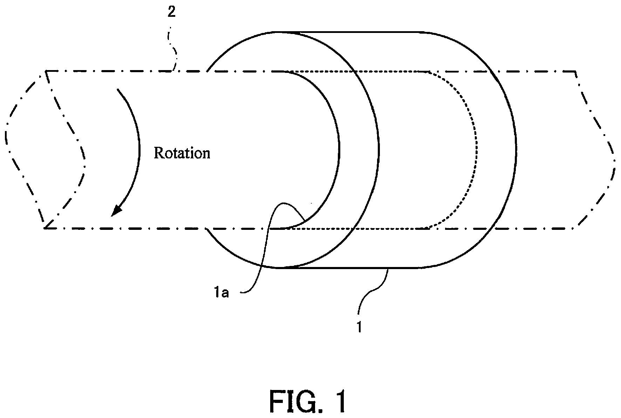

FIG. 1 is a perspective view of a radial bearing 1 (floating bush) as a bearing which is formed of a copper alloy for a bearing according to one embodiment of the present invention. The radial bearing 1 supports, in the radial direction, the load applied onto a counter shaft 2 (dashed-dotted line) which is provided with a turbine blade and a compressor blade on both ends in the axial direction, for example, in a turbo type supercharger for an internal combustion engine. The radial bearing 1 is formed cylindrically, and has an annular cross section orthogonal to the axial direction. By virtue of this, the radial bearing 1 can bear the counter shaft 2 on the inside. The radial bearing 1 according to this embodiment has an inner diameter of 7.5 mm and an outer diameter of 13.6 mm. An oil film of an engine oil as a lubricant oil is formed between the radial bearing 1 and the counter shaft 2. Upon rotation of the counter shaft 2, the counter shaft 2 slides on a sliding surface la which is an internal surface of the radial bearing 1. It is noted that, though not shown, a thrust bearing which supports the load applied onto the counter shaft 2 in the thrust direction may also be formed of the same copper alloy as that for the radial bearing 1. Further, the radial bearing 1 may be formed by combining two half-split bearing parts into a cylindrical shape.

Hereinafter, a copper alloy for a bearing which constitutes the radial bearing 1 will be described. The copper alloy for a bearing contains 40.0 wt% of Zn, 4.0 wt% of Mn, 1.4 wt% of Si and 3.9 wt% of Bi, the balance consisting of Cu and inevitable impurities. The inevitable impurities include Mg, Ni, Ti, B, Pb, Cr and the like, and are impurities mixed during refining or scrapping. The entire content of the inevitable impurities is 1.0 wt% or less. The masses of the respective elements in the copper alloy for a bearing were measured by using an ICP emission spectrophotometer (ICPS-8100 manufactured by Shimadzu Corporation).

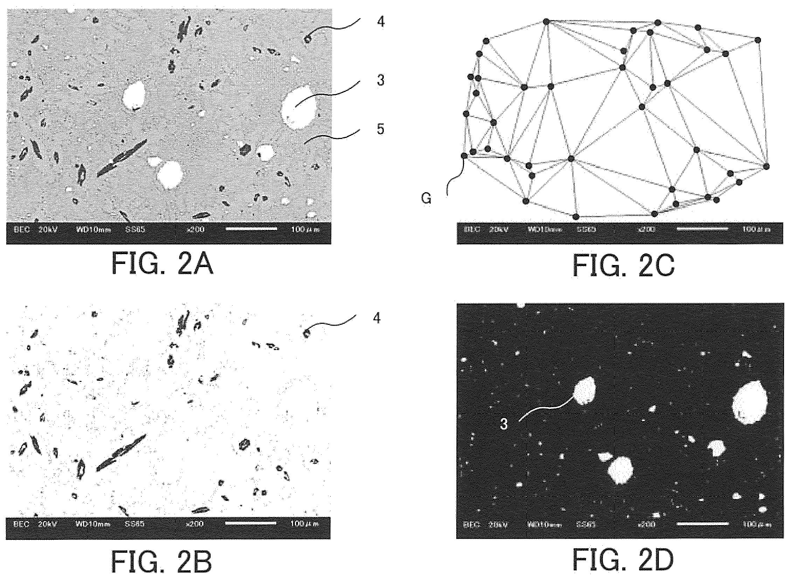

Hereinafter, an explanation will be given about the analysis results of photomicrographs of a sliding surface of a radial bearing 1 and the analysis technique. FIGs. 2A to 2D show photomicrographs of the sliding surface of the radial bearing 1. The photomicrographs of the sliding surface of the radial bearing 1 were taken at a magnification of 200 with an electron microscope (JSM6610A manufactured by JEOL Ltd.). As shown in FIG. 2A, Mn-Si primary crystals 4 (black) and Bi particles 3 are dispersed in a Cu-Zn matrix 5 (gray) in the sliding surface of the radial bearing 1. The Mn-Si primary crystals 4 have a bar-shaped, circular or annular cross section, and the Bi particles 3 have an almost circular cross section.

The image of the photomicrograph of the sliding surface shown in FIG. 2A (hereinafter, "analysis image") was input into an image analyzing device (LUZEX_AP manufactured by NIRECO), and the analysis image was analyzed by the image analyzing device in the following procedures. Firstly, the brightness and contrast of the analysis image were controlled so that images of Mn-Si primary crystals 4 were black and so that images other than those of the Mn-Si primary crystals 4 were white. FIG. 2B shows an analysis image controlled so that images of the Mn-Si primary crystals 4 were black and so that images other than those of the Mn-Si primary crystals 4 were white. The analysis image shown in FIG. 2B was binarized with predetermined brightness, thereby separating the images of the Mn-Si primary crystals 4 from the images other than those of the Mn-Si primary crystals 4. Further, the circle equivalent diameter (measurement parameter: HEYWOOD) of the images of the Mn-Si primary crystals 4 was measured to extract the images of the Mn-Si primary crystals 4 having a circle equivalent diameter of 3 $\mu$m or more. This is because minute Mn-Si crystals (also including eutectics of Mn-Si and Cu-Zn) are excluded from the target for analysis. It is noted that the average circle equivalent diameter of the images of the extracted Mn-Si primary crystals 4 was 26.5 $\mu$m.

Next, the geometrical center of gravity was obtained for the respective images of the particles of the Mn-Si primary crystals 4 having a circle equivalent diameter of 3 $\mu$m or more, and triangles having the closest centers of gravity as apices (hereinafter, referred to as "unit triangles") were formed. FIG. 2C shows unit triangles formed on the analysis image. The phrase "unit triangles having the closest centers of gravity G as apices" means triangles including no center of gravity G other than the centers of gravity G as apices in the unit triangles. Next, the total number and area of the unit triangles were measured to extract the unit triangles with the area of 5000 $\mu$m$^2$ or more. It is noted that the average area among the unit triangles was 6300 $\mu$m$^2$.

Then, the brightness and contrast of the analysis image were controlled so that images of the Bi particles 3 were white and so that images other than those of the Bi particles 3 were black. FIG. 2D shows an analysis image controlled so that images of the Bi particles 3 were white and so that images other than those of the Bi particles 3 were black. The analysis image shown in FIG. 2D was binarized with predetermined brightness, thereby separating the images of the Bi particles 3 from the images other than those of the Bi particles 3. Then, the circle equivalent diameter (measurement parameter: HEYWOOD) of the images of the Bi particles 3 was measured to extract the images of the Bi particles 3 having a circle equivalent diameter of 10 $\mu$m or more. It is noted that the average circle equivalent diameter of the images of the Bi particles 3 was 33 $\mu$m.

Then, the number of triangles having an area of 5000 $\mu$m$^2$ or more and including no image of the Bi particle 3 having a circle equivalent diameter of 10 $\mu$m or more (hereinafter referred to as "Bi-absent triangles"), among the unit triangles, was measured. The phrase "no image of the Bi particle 3 in the unit triangles" means that even a part of the image of the Bi particle 3 having a circle equivalent diameter of 10 $\mu$m or more is absent in the unit triangles. Further, the proportion of the Bi-absent triangles was calculated by dividing the number of the Bi-absent triangles by the total number of the unit triangles. In this embodiment, the proportion of the Bi-absent triangles was 20%. Here, the phrase "Bi-absent triangles" means a region where the Mn-Si primary crystals 4 are present sparsely and the Bi particles 3 having a large particle size are absent. Accordingly, a small proportion of the Bi-absent triangles means that there are few regions where the Mn-Si primary crystals 4 are present sparsely and that there is a high possibility that the Bi particles 3 may be present in the regions where the Mn-Si primary crystals 4 are present sparsely.

(1-1) Evaluation of wear resistance:

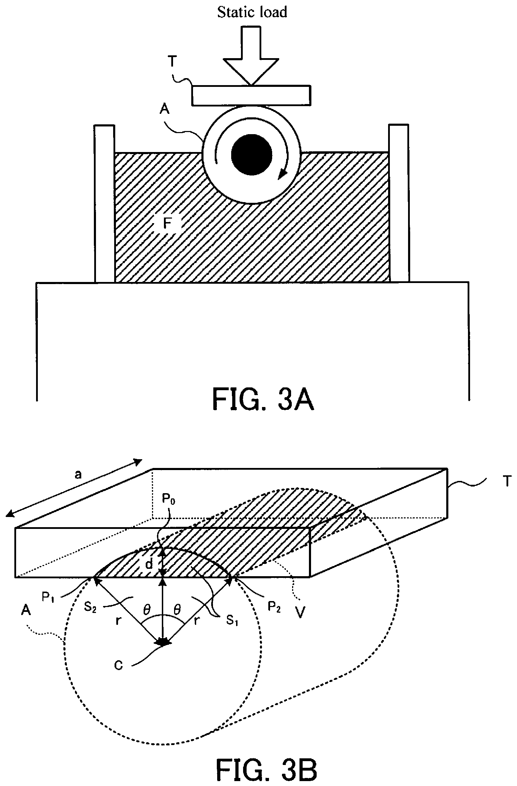

In order to evaluate the wear resistance of the copper alloy for a bearing constituting the radial bearing 1, a wear test was conducted. FIG. 3A is a schematic view explaining a cylindrical flat plate type friction/wear tester used in the wear test. The wear test was conducted by rotating a columnar counter material A in a state where it was partially immersed in an engine oil (liquid paraffin) F as a lubricant oil, and contacting a test piece T with the counter material A so that predetermined static load was applied onto the counter material A. The test piece T was formed into a planar plate shape under the same conditions as those for the copper alloy for a bearing constituting the radial bearing 1. The counter material A was formed of a material equivalent to that for the counter shaft 2 to be borne by the radial bearing 1. Specifically, the counter material A was formed of SCM415 (chromium-molybdenum steel) subjected to hardening. The length a of the test piece T in the rotation axis direction of the counter material A was defined as 10 mm, and the radius r of the bottom surface of the counter material A was defined as 20 mm. The rotation speed of the counter material A was regulated so that the relative moving speed b of the counter material A with respect to the test piece T at the sliding part was 200 mm/sec. Also, the static load was defined as 139 N, the temperature of the lubricant oil was defined as room temperature, and the test time c was defined as 3600 sec. (1 hour). After the wear test conducted under the above conditions, the depth profile of the sliding part on which the counter material A slid, in the test piece T, was measured with a surface roughness meter (SE3400 manufactured by Kosaka Laboratory Ltd.). Then, the difference in depth between the flat part (non-worn part) and the deepest part in the depth profile was measured as wear depth d.

Further, the specific wear quantity K was calculated based on the following Equation (1).

[Equation 1]

$$K = \frac{V}{L \times W} \quad \cdots \quad (1)$$

L represents a sliding distance, which is the surface length of the counter material A having slid on the test piece T in the wear test. The sliding distance L is a value (bxc) obtained by multiplying the test time c by the relative moving speed b. V represents the volume (wear volume) of the test piece T having worn in the wear test. As indicated in Equation (1), the specific wear quantity K means the volume of the test piece T having worn per unit sliding distance (1 mm) when the unit load (1 N) has been applied onto the test piece T. It is meant that, the smaller the specific wear quantity K is, the higher the wear resistance is.

Next, the wear volume V will be explained. FIG. 3B is a schematic view explaining the wear volume V. As shown by hatching in FIG. 3B, the shape of the worn portion in the test piece T can be considered to correspond to the shape of a portion, sinking in the test piece T at the end of the wear test, in the counter material A. The counter material A sinks most deeply in the radius $CP_0$ orthogonal to the sliding surface 1a of the test piece T from the center C at the circular bottom surface of the counter material A, and the sinking depth of the counter material A in the radius $CP_0$ is defined as wear depth d. Here, when the points of the lower limits of the portion sinking in the test piece T at the end of the wear test on the circumference of the bottom surface of the counter material A are designated as $P_1$ and $P_2$, respectively, the wear volume V can be obtained by multiplying the length a of the test piece T by the area of the portion enclosed by the arc $P_1P_2$ and chord $P_1P_2$ in the bottom surface of the counter material A. The area of the portion enclosed by the arc $P_1P_2$ and chord $P_1P_2$ in the bottom surface of the counter material A corresponds to the area obtained by subtracting the triangular area S2 enclosed by the chord $P_1P_2$ and radiuses $CP_1$ and $CP_2$ from the sectoral area S 1 enclosed by the arc $P_1P_2$ and radiuses $CP_1$ and $CP_2$. Accordingly, the wear volume V can be calculated based on the following Equation (2).

[Equation 2]

$$V = (S_1 - S_2) \times a \quad \cdots \quad (2)$$

The sectoral area S1 can be calculated based on the following Equation (3).

[Equation 3]

$$S_1 = \pi \times r^2 \times \frac{2\theta}{2\pi} \quad \cdots \quad (3)$$

wherein θ represents a half of the angle formed by the radius $CP_1$ or $CP_2$ at the center C of the bottom surface of the counter material A. It is noted that the angle 8 satisfies the following Equation (4).

[Equation 4]

$$\cos\theta = \frac{r-d}{r} \quad \cdots \quad (4)$$

On the other hand, the triangular area S2 can be calculated based on the following Equation (5) from the figural symmetry.

[Equation 5]

$$S_2 = \left\{ (r-d) \times \sqrt{r^2 - (r-d)^2} \times \frac{1}{2} \right\} \times 2 \quad \cdots \quad (5)$$

When measured in the above manner, the specific wear quantity K of the copper alloy for a bearing constituting the radial bearing 1 of this embodiment was $1.95 \times 10^{-10}$ mm$^2$/N, which is a favorable result.

(1-2) Evaluation of seizure resistance:

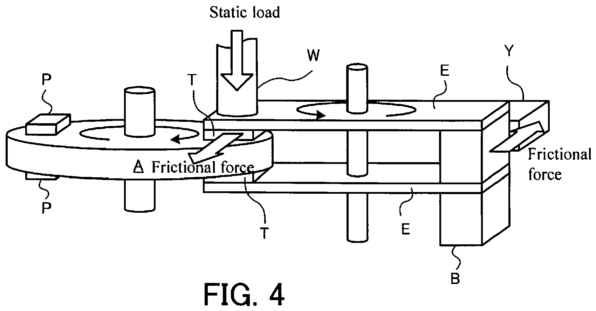

In order to evaluate the seizure resistance of the copper alloy for a bearing constituting the radial bearing 1, a seizure test was conducted. FIG. 4 is a schematic view explaining a pin-on-disk tester used in the seizure test. The seizure test was conducted by arranging a pair of test pieces T so that the rotating disk-shaped counter material A was sandwiched therebetween in the thickness direction, and applying static load between the test pieces T by a hydraulic cylinder W. The rotation speed of the counter material A was controlled so that the relative speed of the counter material A with respect to the test pieces T at a contact part between them was 15 m/sec. Also, an oil was supplied to the contact part between the counter material A and the test pieces T by bringing an oil supply pad P for retaining a lubricant oil (SAE30 CD-grade) in contact with the counter material A. The counter material A was formed of SCM415 subjected to hardening. The pair of test pieces T were attached to tip ends of beam parts E rotatably held in a plane parallel with the counter material A, and a load cell Y was arranged so as to prevent the horizontal rotation of the beam parts E. At the end parts of the beam parts E where the test pieces T were not be provided, balance weights B were attached to cancel the moment in a perpendicular direction which was generated at the beam parts E by the hydraulic cylinder W.

Frictional force is generated between the counter material A and the test pieces T, and the beam parts E rotate horizontally by the frictional force. Therefore, frictional force which horizontally rotates the beam parts E is applied to the load cell Y, and the magnitude of the load measured by the load cell Y means the magnitude of the frictional force between the test pieces T and the counter material A. Therefore, when the load applied to the load cell Y had arrived at a predetermined threshold value or more, it was determined that the frictional force between the test pieces T and the counter material A was abnormally large so that seizure occurred.

The magnitude of the static load applied between the test pieces T by the hydraulic cylinder W was gradually increased (2 MPa/5 min.) to measure the seizure load as the static load when seizure occurred between the test pieces T and the counter material A. Further, the seizure surface pressure was measured by dividing the seizure load by the contact area between the test pieces T and the counter material A.

When measured in the above manner, the seizure surface pressure of the copper alloy for a bearing constituting the radial bearing 1 of this embodiment was 23 MPa, which is a favorable result. It is meant that the greater the seizure surface pressure is, the higher the seizure resistance is.

As explained above, the proportion of the Bi-absent triangles in the sliding surface of the radial bearing 1 was 20% in this embodiment, and it could be confirmed that there were few regions where the Mn-Si primary crystals 4 were present sparsely, and that there was a high possibility that the Bi particles 3 might be present also in the regions where the Mn-Si primary crystals 4 were present sparsely. Therefore, even if there are regions where the Mn-Si primary crystals 4 are present sparsely, Bi can be configured to cover the Mn-Si primary crystals 4 and the frictional resistance in the Mn-Si primary crystals 4 can be reduced. Accordingly, it could be confirmed that the frictional heat in the Mn-Si primary crystals 4 could be reduced, leading to realization of good seizure surface pressure of 23MPa.

(2) Method for producing radial bearing

In the present embodiment, the radial bearing 1 is produced by carrying out the following steps: (a) melting, (b) continuous casting, (c) cutting and (d) mechanical processing in turn. Hereinafter, the respective steps will be explained.

a. Melting

Firstly, raw materials were weighed and provided so as to enable the formation of a copper alloy for a bearing containing 40.0 wt% of Zn, 4.0 wt% of Mn, 1.4 wt% of Si and 3.9 wt% of Bi, the balance consisting of Cu and inevitable impurities. In the present embodiment, a Cu ingot, a Zn ingot, a Cu-Mn ingot, and a Cu-Si ingot, respectively, were weighed and provided. The raw materials should be provided in masses according to the target mechanical properties of the radial bearing 1. The target mechanical properties of the radial bearing 1 are determined, for example, according to the mechanical properties of the counter shaft 2. Next, the provided raw materials are heated up to 1200°C by a high-frequency induction furnace. Thus, the respective ingots melt. Thereafter, bubbles of Ar gas are dispersed and jetted to remove hydrogen gas and inclusions.

b. Continuous casting

Next, the molten materials for the copper alloy for a bearing were injected into a mold, and the copper alloy for a bearing is continuously pulled out through an opening of the mold in the casting direction and cooled, as it is, to room temperature, thereby forming a continuously cast bar of the copper alloy for a bearing. For example, casting is carried out at 1060°C by means of a mold formed of carbon, and the copper alloy for a bearing is pulled out at a pulling-out speed of 90 mm/min, thereby forming a continuously cast bar. It is considered that, in the solidification process in continuous casting from the molten state, the Mn-Si primary crystals 4 are crystallized out first; that the Cu-Zn matrix 5 is crystallized out next; and that a eutectic of Mn-Si and Cu-Zn is solidified at the end. It is noted that the diameter of the continuously cast bar of the copper alloy for a bearing is made larger by the machining quantity in the mechanical processing than the outer diameter of the radial bearing 1.

**EP 3 208 353 A1**

c. Cutting

Then, the continuously cast bar of the copper alloy for a bearing is cut for each thickness of the radial bearing 1 (thickness in the length direction of the counter shaft 2).

d. Mechanical processing

Finally, the continuously cast bar of the copper alloy for a bearing after cutting is subjected to machine work or press work, thereby completing the radial bearing 1. Here, machine work is carried out so as to form a through hole having an inner diameter which is larger by a predetermined quantity than the outer diameter of the counter shaft 2 and so that the outer diameter size of the radial bearing 1 coincides with a designed value.

(3) Experimental results:

Table 1 indicates the experimental results of a plurality of Examples 1 to 3. It is noted that Example 3 is identical with the first embodiment. The values for the wear quantitative ratio in Table 1 are obtained by dividing the specific wear quantities K of Examples 1 to 3 by the specific wear quantity K of Example 3.

[Table 1]

| # | Average circle equivalent diameter of the Mn-Si primary crystals [$\mu$m] | Average circle equivalent diameter of the Bi particles [$\mu$m] | Average area among the unit triangles [$\mu$m$^2$] | Proportion of the Bi-absent triangles [%] | Seizure surface pressure [MPa] | Wear quantity ratio |
|---|---|---|---|---|---|---|
| 1 | 7 | 7 | 550 | 0 | 15 | 1.5 |
| 2 | 17.5 | 30 | 3100 | 10 | 18 | 1.2 |
| 3 (First Embodiment) | 26.5 | 33 | 6300 | 20 | 23 | 1 (Baseline) |

For Examples 1 to 3 each having material formulation which was similar to the material formulation of the first embodiment except the Bi content, the distribution states and shapes of the Bi particles 3 and Mn-Si primary crystals 4 were controlled by controlling the Bi content and also controlling the retention time and cooling speed in continuous casting. Specifically, the Bi content of Example 1 was defined as 1.5 wt%; the Bi content of Example 2 was defined as 4.3 wt%; and the Bi content of Example 3 was defined as 3.9 wt%. As indicated in Table 1, the best seizure surface pressure was obtained in Example 3 involving the largest average area of the unit triangles. It is predicted that, the larger the average area among the unit triangles is, the more the regions where the Mn-Si primary crystals 4 are present sparsely exist, so that seizure is easily caused by the frictional heat in the Mn-Si primary crystals 4. However, it has been understood that even when the average area among the unit triangles is large, sufficient seizure resistance is obtained by increasing the Bi content to some degree to ensure the density of the Bi particles 3 while suppressing the proportion of the Bi-absent triangles to 20% or less and by increasing the average circle equivalent diameter among the Bi particles 3.

(4) Other embodiments

The above embodiment has illustrated an example of the radial bearing 1 formed of the copper alloy of the present invention, but other sliding members may be formed of the copper alloy of the present invention. For example, gear bushes for transmission, piston pin bushes and boss bushes may be formed of the copper alloy of the present invention. Also, the copper alloy for a bearing of the present invention may be produced by any other production method than continuous casting.

REFERENCE SIGNS LIST

8

1... Radial bearing
2... Counter shaft
3... Bi particle
4... Mn-Si primary crystal
5... Cu-Zn matrix

**Claims**

1. A copper alloy for a bearing containing:

   25 wt% or more and 48 wt% or less of Zn,
   1 wt% or more and 7 wt% or less of Mn,
   0.5 wt% or more and 3 wt% or less of Si, and
   1 wt% or more and 10 wt% or less of Bi,
   the balance consisting of inevitable impurities and Cu,
   wherein, in a sliding surface on which a counter material slides, the proportion of triangles having an area of 5000 $\mu m^2$ or more and including no Bi particle with a circle equivalent diameter of 10 $\mu m$ or more, among triangles having the closest three Mn-Si primary crystals as apices, is 20% or less.

2. A bearing containing:

   25 wt% or more and 48 wt% or less of Zn,
   1 wt% or more and 7 wt% or less of Mn,
   0.5 wt% or more and 3 wt% or less of Si, and
   1 wt% or more and 10 wt% or less of Bi,
   the balance consisting of inevitable impurities and Cu,
   wherein, in a sliding surface on which a counter material slides, the proportion of triangles having an area of 5000 $\mu m^2$ or more and including no Bi particle with a circle equivalent diameter of 10 $\mu m$ or more, among triangles having the closest three Mn-Si primary crystals as apices, is 20% or less.

FIG. 1

FIG. 2A

FIG. 2B

FIG. 2C

FIG. 2D

Static load

T

A

F

## FIG. 3A

a

$P_0$

T

d

$P_1$

$S_2$

$\theta$ $\theta$

$P_2$

V

A

r

$S_1$

C

## FIG. 3B

**FIG. 4**

## INTERNATIONAL SEARCH REPORT

| | International application No. |
|---|---|
| | PCT/JP2015/081471 |

A. CLASSIFICATION OF SUBJECT MATTER
*C22C9/04*(2006.01)i, *F16C17/02*(2006.01)i, *F16C33/12*(2006.01)i

According to International Patent Classification (IPC) or to both national classification and IPC

B. FIELDS SEARCHED

Minimum documentation searched (classification system followed by classification symbols)
C22C9/04, F16C17/02, F16C33/12

Documentation searched other than minimum documentation to the extent that such documents are included in the fields searched
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2003-119527 A (Chuetsu Metal Works Co., Ltd.), 23 April 2003 (23.04.2003), (Family: none) | 1-2 |
| A | JP 9-78163 A (Taiho Kogyo Co., Ltd.), 25 March 1997 (25.03.1997), (Family: none) | 1-2 |
| A | JP 2012-215251 A (Daido Metal Co., Ltd.), 08 November 2012 (08.11.2012), & US 2012/0251383 A1 & GB 2489609 A & DE 102012204900 A1 & CN 102734316 A & KR 10-2012-0112178 A | 1-2 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 January 2016 (25.01.16) | 02 February 2016 (02.02.16) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (January 2015)

**REFERENCES CITED IN THE DESCRIPTION**

**Patent documents cited in the description**

• JP 2011179600 A